# EUROPEAN PATENT SPECIFICATION

(11) **EP 1 419 606 B1**
(45) Date of publication and mention of the grant of the patent: **26.10.2005**
(21) Application number: 02796240.6
(22) Date of filing: 19.08.2002
(51) Int. Cl.: H04L 1/16

(54) **A METHOD OF ACKNOWLEDGING DATA**
VERFAHREN ZUM BESTÄTIGEN VON DATEN
PROCEDE DE MISE EN OEUVRE D'ACCUSE DE RECEPTION DE DONNEES

(30) Priority: 21.08.2001 GB 0120303; 20.12.2001 GB 0130436
(43) Date of publication of application: 19.05.2004
(73) Proprietor: SIEMENS AKTIENGESELLSCHAFT, 80333 München (DE)
(72) Inventor: ISAACS, Kenneth, Richard, Bournemouth, Hampshire BH7 7HF (GB); DAVIS, Simon, Paul, Romsey, Hampshire SO51 7LX (GB); PROCTOR, Toby, Kier, Southampton, Hampshire SO14 3TP (GB)
(74) Representative: Payne, Janice Julia
(86) International application number: PCT/EP2002/009231
(87) International publication number: WO 2003/019852

(56) References cited:
- WO-A-00/45543
- WO-A-98/26567
- KRISHNA M SIVALINGAM ET AL: "ACKNOWLEDGEMENT TECHNIQUES OF RANDOM ACCESS BASED MEDIA ACCESS PROTOCOLS FOR A WDM PHOTONIC ENVIRONMENT" COMPUTER COMMUNICATIONS, ELSEVIER SCIENCE PUBLISHERS BV, AMSTERDAM, NL, vol. 16, no. 8, 1 August 1993 (1993-08-01), pages 458-471, XP000382314 ISSN: 0140-3664

## Description

This invention relates to a method of acknowledging data, in particular for use in mobile phone systems.

Conventional fixed line telecommunication systems cater for acknowledged and unacknowledged communication. When a data block is transmitted between two points on a particular channel, an acknowledgement will be sent back along that channel for acknowledged communications. A similar arrangement is used for mobile communications, which rely on radio channels. Data flow is on predetermined channels and the acknowledgement will be sent on the same channel. However, mobile communications have a more limited capacity because of the need to transmit through the air interface, so sending an acknowledgement by itself is not always an efficient use of resources.

In accordance with the present invention, a method of acknowledging data blocks comprises receiving data blocks transmitted on a radio channel; generating an acknowledgement block for the received data blocks, the acknowledgement block including an acknowledgement indicator field; choosing to send the acknowledgement on any available radio channel which is in use; setting the acknowledgement indicator to indicate whether the acknowledgement relates to receiving data blocks transmitted on the same radio channel as the radio channel carrying the acknowledgement, or whether it does not relate to receiving data blocks transmitted on the same radio channel as the channel carrying the acknowledgement; and transmitting the acknowledgement on the available radio channel.

The present invention addresses the problem of inefficient use of resources by sending an acknowledgement on any available radio channel which is in use for e.g. the purpose of data transmission and providing an indicator as to whether the acknowledgement relates to that radio channel or not.

Preferably, the acknowledgement is in the form of a bitmap

Preferably, the acknowledgement indicator field is set to '01' to indicate that the radio channel identity is included in an ack/nack description to identify to which radio channel the ack/nack description is targeted.

Preferably, the acknowledgement indicator is set to '10' to indicate that the receiving radio channel and the acknowledgement radio channel are the same.

Preferably, the radio channel comprises a GERAN radio bearer.

Preferably, the available channel is in use for the purpose of data transmission.

An example of a method of acknowledging data in accordance with the present invention will now be described with reference to the accompanying drawings in which:
Figure 1 illustrates a method according to the present invention, in which the radio bearers for data and acknowledgement have the same identity;
Figure 2 illustrates a method according to the present invention for multiple radio bearers; and,
Figure 3 illustrates a method according to the present invention, in which the radio bearers for data and acknowledgement have the same identity for multiple radio bearers;

Document WO9826567 presents two possible types of wireless systems: One in which the reverse channel uses the same radio frequency of a forward channel ; and a second one in which a different radio frequency is used.

The present invention is able to improve efficiency of use of available resources in mobile communications systems. Although, the method is able to work in fixed line systems, there is not the same incentive to implement it. Thus, in communication systems that use multiple logical channels, for which some of the logical channels support acknowledged services, efficiency can be improved by piggy backing acknowledgements for one logical channel with data for another logical channel. One example of where this may be used is in Geran, as detailed below. In GSM/EDGE Radio Access Network (Geran), dedicated physical sub-channels (DPSCH) exist across the air interface between the mobile station and the network. Acknowledgements of radio blocks on slow associated control channel (SACCH), stand-alone dedicated control channel (SDCCH) and fast associated control channel (FACCH) are mapped onto a DPSCH. However, on the SACCH, SDCCH and FACCH logical channels when mapped onto a DPSCH, there is only limited capacity. The SACCH for instance will only occur in the 13th and 26th frames of a multiframe structure for the DPSCH. Thus, it is important that the use of these channels is optimised.

The SACCH, SDCCH and FACCH logical channels support both acknowledged and unacknowledged services for multiple radio bearers. These logical channels may support 4 or even 8 radio bearers, with each radio bearer being identified by a radio bearer identity. The radio link control/medium access control (RLC/MAC) protocol operates across this interface. Formats of the headers of the RLC/MAC blocks for data and control information have already been proposed. In this proposal, acknowledgements for a given radio bearer that is operating in an acknowledged mode are piggy backed with data in data blocks for the same radio bearer. If there is no data to send then the acknowledgement can be sent with an empty data block. However, this is a waste of resources and the present invention aims to improve the use of resources based on the principle that acknowledgements for one radio bearer may be piggy-backed with data for another radio bearer. This is particularly beneficial in the case of multiple radio bearers, as it reduces the probability of an acknowledgement being sent with an empty data block. A further optimisation is that the acknowledgements for multiple radio bearers may be included in one data block.

An alternative is to piggy back an acknowledgement for one radio bearer with data for a radio bearer that is operating in unacknowledged mode. In this case it is necessary for the receiver of the acknowledgements to signal that it has received the acknowledgement.

Acknowledgements may be either piggy backed in data blocks or be sent in blocks containing no data if there is no data available for the signalling radio bearer (SRB) in the direction of the transmission of the acknowledgement. In the case of multiple temporary block flows (TBFs), there may be the situation where an acknowledgement is required to be sent for a SRB and there is no data available for this SRB in the direction of the acknowledgement, but there is data available for another SRB in the direction of transmission of the acknowledgement. In this case it is beneficial if an acknowledgement for a SRB X is sent with data for SRB Y.

In order to indicate whether the acknowledgements apply to a SRB other than the SRB for which the data block is intended, the definition of an acknowledgement indicator (AI) field is extended as shown in Table 1. Table When the AI field indicates that the acknowledgements are for a SRB other than the SRB for which there is data, then the format of the acknowledgement bit map is shown in Table 2 below.

This proposal introduces more complexity into the RLC and one of the problems introduced relates to sending acknowledgements with data for an unacknowledged radio bearer. If acknowledgements are sent on unacknowledged radio bearers they may get lost, and will not be retransmitted. This may cause the window to get stalled, so the sender may need to periodically poll for a response. Alternatively the receiver could send back an acknowledgement to indicate that it had received an ack/nack bit map on an unacknowledged radio bearer. This would involve sending the radio bearer id, and the send sequence number of the start of the ack/nack bit map.

Another difficulty arises with retransmissions. If a data block is required to be resent, then the acknowledgements for the radio bearer that was being acknowledged in the first transmission should be sent, although the latest bit map should be sent, to avoid possible ordering problems at the receiver. In order for the sender of the ack/nack bit map to know when it can advance its window, it would be necessary to maintain copies of the bit maps on each of the bearers on which the bit map was sent.

**Table 1.**

| Ack Indicator | |
|---|---|
| AI: Ack Indicator | |
| 0 0 | Ack/Nack description not included- Reserved |
| 0 1 | Ack/Nack description included- different TFI |
| 1 0 | Ack/Nack description included |
| 1 1 | Ack/Nack description not included. No retransmission requested (all RLC blocks received, similar to FINAL_ACK_INDICATION==1) |
| Note: the AI is here two bits in order to avoid one extra bit in the Ack/Nack description. This prevents wasting 7 bits of RLC Data, assuming the data is byte aligned (as in GPRS). | |

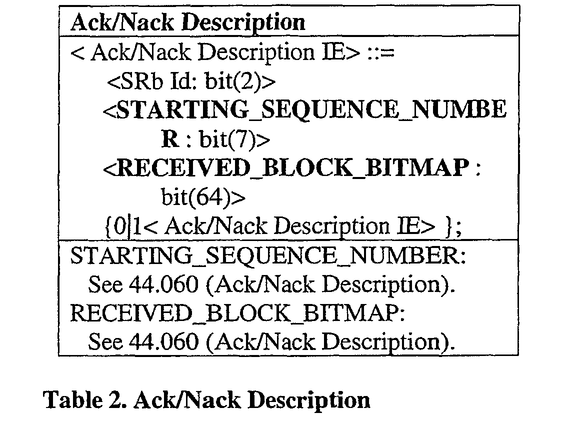

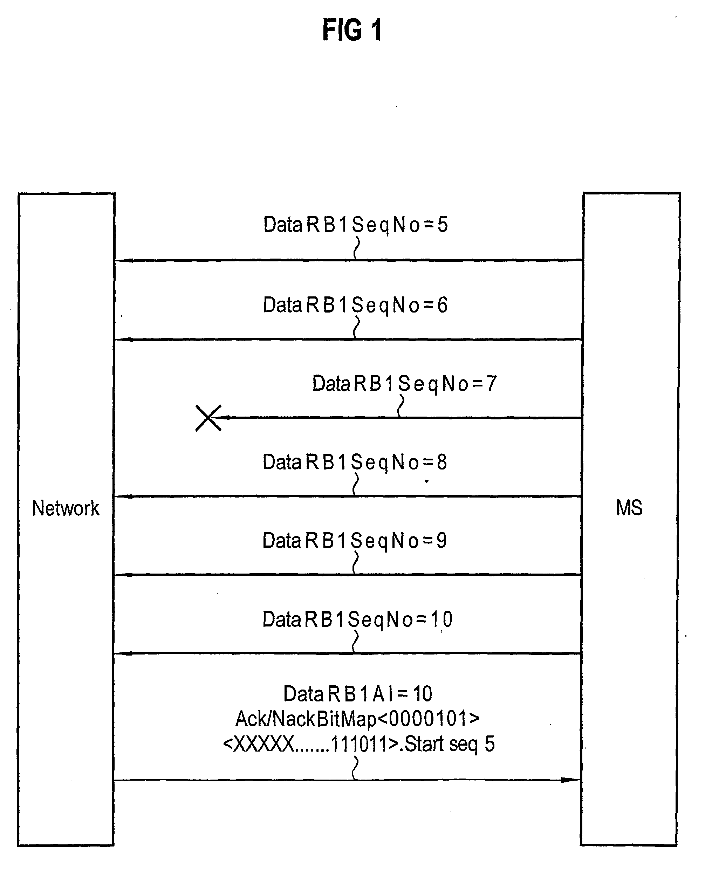

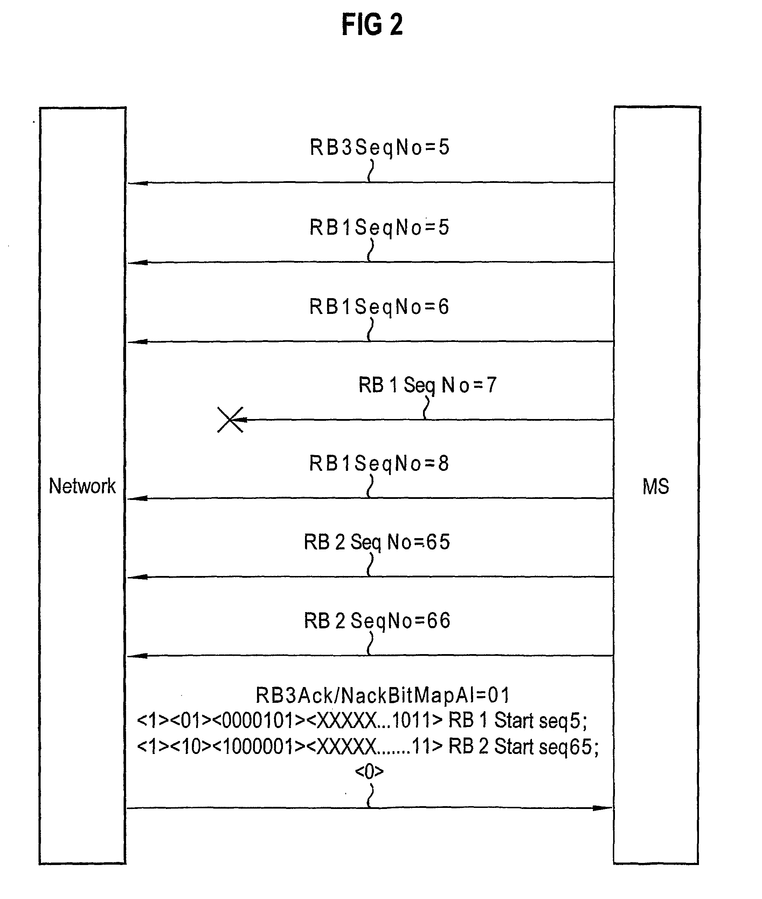

Specific examples of the formats of the acknowledgement bitmaps for three scenarios are shown in Figs. 1 to 3. In Fig. 1, the acknowledgement bitmap is for the same radio bearer as the data, whilst in Fig. 2, the data for radio bearer 1 contains the acknowledgement bitmaps for radio bearers 1 and 2. In each of the figures the layout of the ack/nack description is determined by the setting of the 'AI' field. Fig. 1 shows data flow from MS to the network on radio bearer 1, for sequence numbers 5 to 10. All of the data is received at the network except for the data packet whose sequence number is 7. In the ack/nack description the start sequence number of the ack/nack bit map is 5 and the bit map indicates that sequence numbers 5,6,8,9, and 10 were received.

Fig.2 shows data flow from the MS to the network on radio bearers 1, 2, and 3. An acknowledgement is sent by the network with data for radio bearer 3. The acknowledgements are for data received on radio bearers 2 and 3. The AI field set to '01' indicates and the radio bearer identity is included in the ack/nack description to identify which radio bearer the ack/nack description is targeted. Ack/nack bits maps for radio bearers 1 and 2 are piggybacked with data for radio bearer 3.

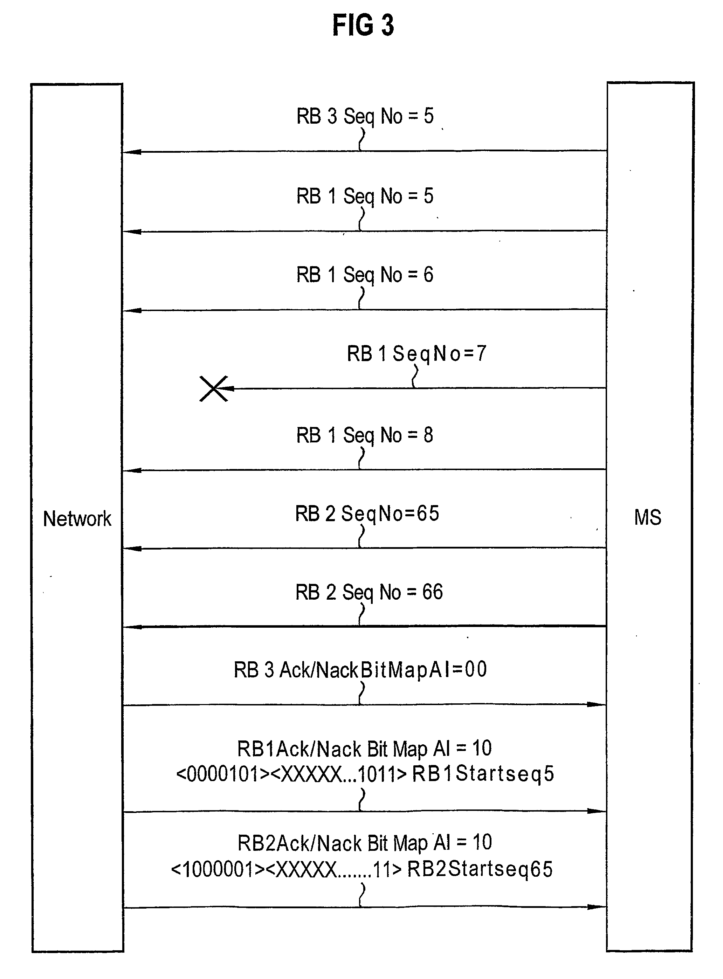

Fig. 3 achieves the same net data flow as in Fig. 2, although in Fig. 2 there are two less messages exchanged. However, the format of the ack/nack description in Fig. 2 is more complex in Fig. 3. The format of the data flow in Fig. 2 is of benefit when there is a need to limit the number of messages exchanged, as across the air interface in Geran. This mechanism would offer little benefit for a fixed network when there is not such a need to make efficient use of the resources.

## Claims

1. A method of acknowledging data blocks, the method comprising receiving data blocks transmitted on a radio channel (RB1, RB2, RB3); generating an acknowledgement block for the received data blocks; **characterized in that**: the acknowledgement block including an acknowledgement indicator field (AI); choosing to send the acknowledgement on any available radio channel which is in use (RB1, RB2, RB3); setting the acknowledgement indicator to indicate whether the acknowledgement relates to receiving data blocks transmitted on the same radio channel as the radio channel carrying the acknowledgement, or whether it does not relate to receiving data blocks transmitted on the same radio channel as the channel carrying the acknowledgement; and transmitting the acknowledgement on the available radio channel.

2. A method according to claim 1, wherein the acknowledgement is in the form of a bitmap.

3. A method according to any preceding claim, wherein the acknowledgement indicator is set to '01' to indicate that the radio channel identity is included in an ack/nack description to identify to which radio channel the ack/nack description is targeted.

4. A method according to any of claims 1 to 3, wherein the acknowledgement indicator is set to '10' to indicate that the receiving radio channel and the acknowledgement radio channel are the same.

5. A method according to any preceding claim, wherein the radio channel comprises a GERAN radio bearer.

6. A method according to any preceding claim, wherein the available channel is in use for the purpose of data transmission.

## Patentansprüche

1. Verfahren zum Bestätigen von Datenblöcken, wobei das Verfahren folgende Schritte umfasst: Empfangen von Datenblöcken, die über einen Funkkanal (RB1, RB2, RB3) übertragen werden; Erzeugen eines Bestätigungs-Datenblocks für die empfangenen Datenblöcke; **gekennzeichnet dadurch, dass** der Bestätigungs-Datenblock ein Bestätigungs-Indikatorfeld (AI) beinhaltet; wahlweises Senden der Bestätigung über einen beliebigen verfügbaren Funkkanal, der genutzt wird (RB1, RB2, RB3); Setzen des Bestätigungs-Indikatorfeldes derart, dass es angibt, ob sich die Bestätigung auf den Empfang von Datenblöcken bezieht, die über denselben Funkkanal übertragen wurden, auf dem auch die Bestätigung übermittelt wird, oder ob sich die Bestätigung nicht auf den Empfang von Datenblöcken bezieht, die über denselben Funkkanal übertragen wurden, auf dem auch die Bestätigung übermittelt wird; sowie Übertragen der Bestätigung auf dem verfügbaren Funkkanal.

2. Verfahren nach Anspruch 1, bei dem die Bestätigung die Form einer Bitmap hat.

3. Verfahren nach einem der vorstehenden Ansprüche, bei dem das Bestätigungs-Indikatorfeld auf "01" gesetzt wird um anzuzeigen, dass die Kennung des Funkkanals in einem ACK/NACK-Paket enthalten ist, um zu erkennen, auf welchen Funkkanal sich das ACK/NACK-Paket bezieht.

4. Verfahren nach Anspruch 1 bis 3, bei dem das Bestätigungs-Indikatorfeld auf "10" gesetzt wird um anzuzeigen, dass der empfangende Funkkanal identisch ist mit dem Funkkanal, über den die Bestätigung gesendet wird.

5. Verfahren nach einem der vorstehenden Ansprüche, bei dem der Funkkanal einen GERAN-Funkträger beinhaltet.

6. Verfahren nach einem der vorstehenden Ansprüche, bei dem der verfügbare Funkkanal zum Zweck der Datenübertragung genutzt wird.

## Revendications

1. Procédé d'accusé de réception de blocs de données, le procédé comprenant la réception de blocs de données émis sur un canal radio (RB1, RB2, RB3) ; la production d'un bloc d'accusé de réception pour les blocs de données reçus, **caractérisé en ce que** le bloc d'accusé de réception comprend un champ d'indicateur d'accusé de réception (AI) ; le choix d'envoyer l'accusé de réception sur un quelconque canal radio disponible qui est en service (RB1, RB2, RB3) ; le réglage de l'indicateur d'accusé de réception pour indiquer si l'accusé de réception est relatif à la réception de blocs de données émis sur le même canal radio que le canal radio transportant l'accusé de réception ou s'il n'est pas relatif à la réception de blocs de données émis sur le même canal radio que le canal radio transportant l'accusé de réception, et l'émission de l'accusé de réception sur le canal radio disponible.

2. Procédé selon la revendication 1, dans lequel l'accusé de réception est en mode point.

3. Procédé selon l'une quelconque des revendications précédentes, dans lequel l'indicateur d'accusé de réception est réglé sur « 01 » pour indiquer que l'identité du canal radio est incluse dans une description accusé de réception positif/accusé de réception négatif pour identifier le canal radio sur lequel la description accusé de réception positif/accusé de réception négatif est ciblée.

4. Procédé selon l'une quelconque des revendications 1 à 3, dans lequel l'indicateur d'accusé de réception est réglé sur « 10 » pour indiquer que le canal radio de réception et le canal radio d'accusé de réception sont les mêmes.

5. Procédé selon l'une quelconque des revendications précédentes, dans lequel le canal radio est constitué par un support radio GERAN.

6. Procédé selon l'une quelconque des revendications précédentes, dans lequel le canal disponible est en service aux fins de la transmission de données.
